# EUROPEAN PATENT APPLICATION

(11) **EP 4 738 777 A1**
(43) Date of publication of application: **06.05.2026**
(21) Application number: 24210782.9
(22) Date of filing: 05.11.2024
(51) Int. Cl.: H04L 41/16, H04L 47/2441

(54) **DETERMINING NETWORK USAGE CATEGORIES FOR NETWORK TRAFFIC FLOWS**

(71) Applicant: Cujo LLC, Covina, CA 91723 (US)
(72) Inventor: Chen, Shimon, 6473118 Tel Aviv (IL)
(74) Representative: Marks & Clerk LLP

(57) **Abstract**

An encrypted data transmission between a connected device and an access point is monitored (102) during a time window to obtain network data. One or more network traffic flows are detected (108) based on the network data. One or more application-agnostic network usage categories for the one or more network traffic flows are determined (110) based on the network data, wherein one or more unknown applications executing on the connected device cause the encrypted data transmission to be categorized as the one or more network usage categories.

## Description

### FIELD

The invention relates to a method, apparatus, computer program product, and computer-readable medium.

### BACKGROUND

Internet service providers (ISP) are constantly striving to optimize their infrastructure and configurations to achieve an optimal quality of experience (QoE) for their customers with given cost constraints. Hence, the nature of network traffic needs to be understood as different types of traffic (for example real-time video streaming, online gaming, and buffered video streaming) have different infrastructure needs. As network data encryption becomes more widespread, it is becoming harder for ISPs to understand the type of traffic being transmitted. Clearly, more sophistication is desirable in regard to determining network usage categories for network traffic flows.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1 is a flowchart illustrating examples of a method;
FIG. 2A and FIG. 2B are block diagrams illustrating example implementation environments for the method;
FIG. 3A and FIG. 3B are block diagrams illustrating examples of a cybersecurity apparatus;
FIG. 4 is a block diagram illustrating an example of a connected device;
FIG. 5 is a block diagram illustrating an example of a computing resource;
FIG. 6A and FIG. 6B are block diagrams illustrating examples of a customer-premises equipment as an access point; and
FIG. 7 illustrates further examples of the method.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Encrypted data transmission between a connected device and an access point may be caused by one or more applications executing on the connected device. The encrypted data transmission of a single connected device may contain a plurality of network traffic flows. It would be beneficial for a network operator or a cybersecurity operator to determine a network usage category for the network traffic flow. An application executing on the connected device causes the network usage categories for the encrypted data transmission. The determination is made more difficult by the encrypted data, and the encrypted metadata such as Encrypted Client Hello, or ECH, and Domain Name System (DNS) over Hypertext Transfer Protocol Secure (HTTPS), or DoH. The determination between many potential network usage categories in the dirty real-world conditions is harder than in a binary classification research project. Furthermore, several applications may be running in parallel, each with a different network usage category.

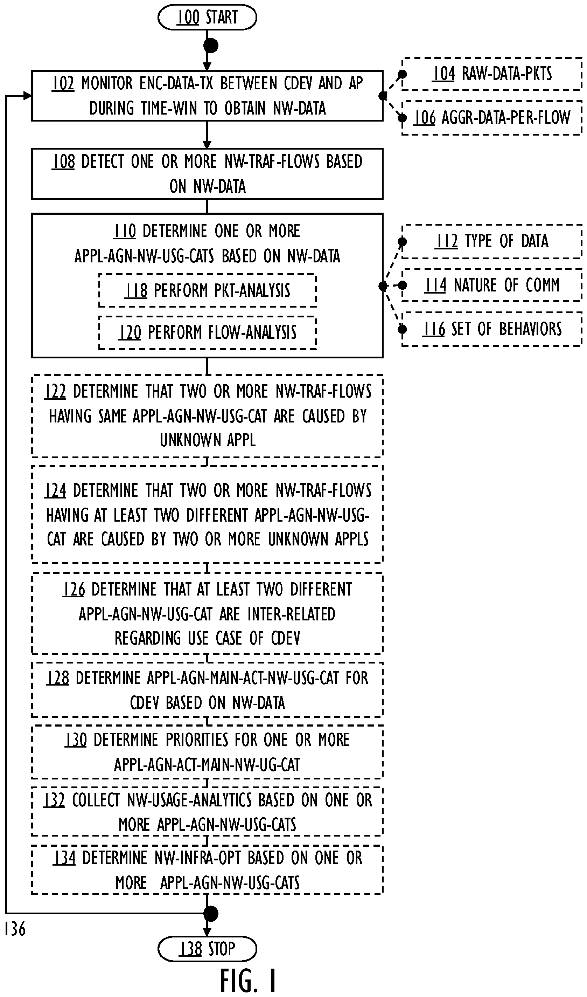

FIG. 1 is a flowchart illustrating examples of a method. The method performs operations related to determining network usage categories for network traffic flows. The method starts in 100 and ends in 138. The method may run in principle endlessly. The infinite running may be achieved by looping 136 back as shown in FIG. 1.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

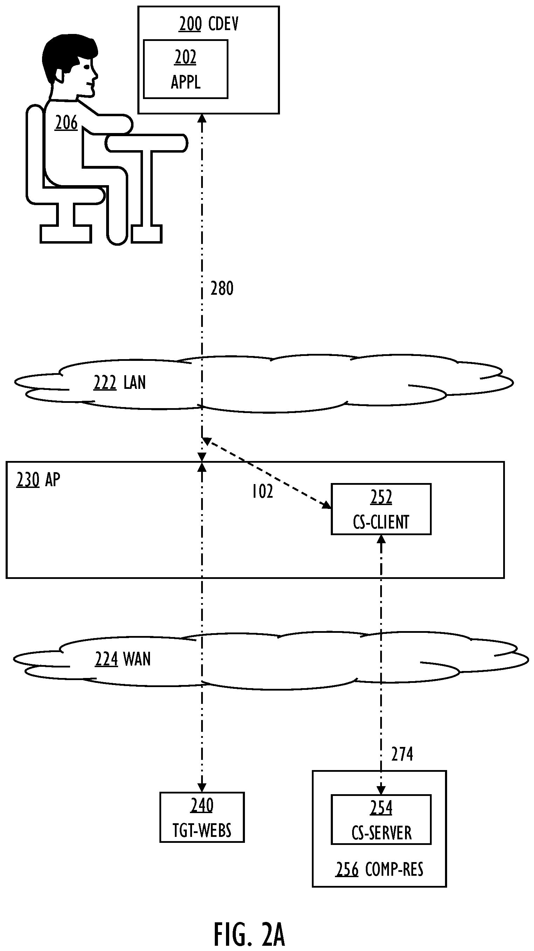

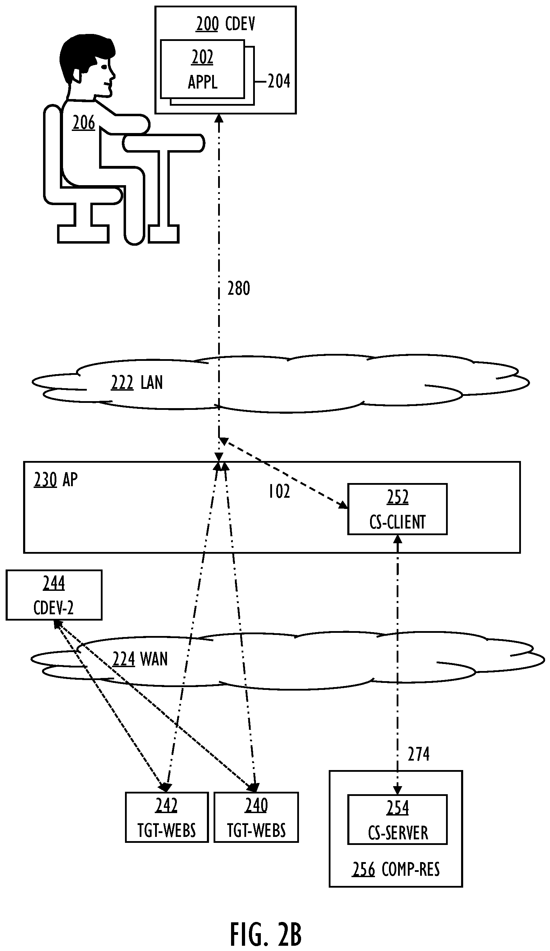

FIG. 2A and FIG. 2B are block diagrams illustrating example implementation environments for the method. The method may be a computer-implemented method. The method may operate within an access point 230, but optionally also partly within a computing resource 256.

First, an encrypted data transmission 280 between the connected device 200 and an access point 230 is monitored 102 during a time window to obtain network data. This may be implemented so that the encrypted data transmission 280 is monitored by the access point 230 in its local area network (LAN) 222. The time window refers to an interval in time during which the monitoring 102 is performed.

Next, one or more network traffic flows are detected 108 based on the network data. In a packet switched network such as the Internet, the network traffic flow may be defined as a sequence of packets carrying information between two hosts, such as between the connected device 200 and a target website 240.

A network monitoring protocol NetFlow developed by Cisco^{®} is designed to capture measurements of volume and types of traffic traversing a network device such as the access point 230. The connected device 200 and the target website 240 establish communication channels (or connections when using TCP). The network traffic flow may refer to any such connection or a connection-like communication channel even if NetFlow is not used for the actual monitoring 102.

A technical document Request for Comments (RFC) 2722 of the Internet Engineering Task Force (IETF) defines a traffic flow as "an artificial logical equivalent to a call or connection." A technical IETF document RFC 3697 defines a traffic flow as "a sequence of packets sent from a particular source to a particular unicast, anycast, or multicast destination that the source desires to label as a flow. A flow could consist of all packets in a specific transport connection or a media stream. However, a flow is not necessarily 1:1 mapped to a transport connection." A technical IETF document RFC 3917 defines a traffic flow as "a set of IP packets passing an observation point in the network during a certain time interval."

As applied to an access point 230 also acting as a router, the network traffic flow may be a host-to-host communication path (from the connected device 200 to the target website 240, for example), or a socket-to-socket communication identified by a unique combination of source and destination addresses and port numbers, together with a transport protocol. The transport protocol may be a Transmission Control Protocol (TCP) or a User Datagram Protocol (UDP), for example. If TCP is used, the network traffic flow may be known as a virtual circuit (or also as a virtual connection or a byte stream).

The packets in the sequence of packets forming the network traffic flow have common properties. On the Internet, the layer 3 protocol is Internet Protocol (IP), and the layer 4 protocol is TCP or UDP. TCP or UDP parameters obtained from packet headers may be used as flow keys. An example ordered list of flow keys is known as a 5-tuple: a source IP address, a destination IP address, a protocol, a source port, and a destination port. The network traffic flow may then be defined as follows: all packets in the network traffic flow share the same 5-tuple, or a transposed 5-tuple. The transposed 5-tuple is needed as there are two transmission directions, from the client 200 to the server 230, but also from the server 230 to the client 200. The transposed 5-tuple is obtained from the 5-tuple by swapping the source and destination addresses with each other, and the source and destination ports with each other. Depending on the used network protocols, also other ways to define the network traffic flow may be used, and besides the 5-tuple, other data structures may be used. The time window of the monitoring 102 may refer to a segment of a network traffic flow, defined using a 7-tuple with the added values of a start timestamp and an end timestamp defining a time period during which the monitoring 102 and an eventual aggregation of flow packets was performed.

Finally, one or more application-agnostic network usage categories for the one or more network traffic flows are determined 110 based on the network data. One or more unknown applications 202, 204 executing on the connected device 200 cause the encrypted data transmission to be categorized as the one or more application-agnostic network usage categories. The unknown application 202, 204 may be capable of operating in different operation modes, and a specific network usage category may be caused by the application 202, 204 executing in a specific operation mode on the connected device 200.

In an example, the network data comprises raw data packets 104 of the encrypted data transmission 280 over the time window. Determining 110 the one or more application-agnostic network usage categories for the one or more network traffic flows based on the network data may be implemented by performing 118 an individual packet analysis of the raw data packets.

In an example, the network data comprises aggregated data 106 of the encrypted data transmission (such as traffic messages) per network traffic flow over the time window. Determining 110 the one or more application-agnostic network usage categories for the one or more network traffic flows based on the network data may be implemented by performing 120 a flow analysis of the aggregated data.

In an example, each one or more application-agnostic network usage categories are defined by characteristics that are visible on the network data.

A first way to define each application-agnostic network usage category is by a type of data 112 of the single unknown application 202 transferred via the encrypted data transmission 280. The type of the data may refer to a media type of the data, for example, such as voice, video, gaming commands, etc.

A second way to define each application-agnostic network usage category is by a nature of the communication 114 of the single unknown application 202 transferred via the encrypted data transmission 280. From a network engineering perspective, a file download network usage category on Steam^{®} is more similar to a file download network usage category on Dropbox^{®} than to an online gaming network usage category on Steam^{®}. In this way, the different network usage categories may be distinguished within the same unknown application 202.

A third way to define each application-agnostic network usage category is by using a single network usage category for the single unknown application 202 causing the encrypted data transmission 280. For example, one or more network traffic flows of a single unknown application 202 such as Steam^{®} are determined 110 as being related to a gaming network usage category.

A fourth way to define each application-agnostic network usage category is by a set of behaviors 116 of the single unknown application 202 detected in the encrypted data transmission 280. The set of behaviors 116 may relate to a specific use case of the unknown application 202.

One, two, three, or four of these three different ways may be used to define the application-agnostic network usage categories.

A non-exhaustive example list of network usage categories comprises, but is not limited to: a real time video streaming network usage category, an on-demand video streaming network usage category, a remote desktop network usage category, an online gaming network usage category, a cloud gaming network usage category, a voice over Internet Protocol (VoIP) network usage category, a video conference network usage category, a file download network usage category, a file upload network usage category, and a web browsing network usage category.

In the application-agnostic way, the application 202 is not known, i.e., the network traffic flows are related to each other by an unknown application 202. In an application-specific way, the application 202 is known, i.e., the network traffic flows are related to each other by a known application 202. An application tag may be provided to the network traffic flows that are related to each other by the known application 202. The known application 202 may be regarded as a label that is assigned to each network traffic flow related to each other by the association. In addition to detecting the known application 202, a specific operation mode of the application 202 may also be detected. The operation mode may be a live streaming mode, or a non-real time viewing mode, or a video uploading mode, or any of the network usage categories defined earlier, for example.

Note that determining 110 the network usage category does not equate with detecting an application running. Because it is possible to detect what application is running, but still not know the network usage category. Consider that the application 202 executing on the connected device 200 is Steam^{®}, but this still does not define whether the user 206 is downloading a game, playing online, using the VoIP feature, or just browsing the store. As another example, if YouTube^{®} application 202 is executing, this still does not define whether the user 260 is watching a normal buffered video or a live video feed. The present method is capable of detecting these different network usage categories, even without knowing the specific application 202. For example, it is determined that a particular network traffic flow is an active online gaming flow network usage category, without knowing what specific game is running on the connected device 202 (and on the target website 240). Consequently, there may not be a 1-to-1 correlation between the application 202 and the network usage category.

In an example illustrated in FIG. 2A, the method further comprises determining 122 that two or more network traffic flows having a same application-agnostic network usage category are caused by one unknown application 202.

In an example illustrated in FIG. 2B, the method further comprises determining 124 that two or more network traffic flows having at least two different application-agnostic network usage categories are caused by two or more unknown applications 202, 204, and determining 126 that the at least two different application-agnostic network usage categories are inter-related regarding a use case of the connected device 200. In the example of FIG. 2B, the user 206 of the connected device 200 may have two separate network traffic flows, one to a target website 240 hosting an online game service, and another to a target website 242 hosting a VoIP service. Note also a second connected device 244 connected to these two websites 240, 242. The connected devices 200, 244 may then play the same online game hosted on the target website 240, and communicate using the VoIP service hosted on the target website 242.

In an example, the method further comprises determining 128 an application-agnostic main active network usage category for the connected device 200 based on the network data. The application-agnostic main active network usage category refers to a main activity that the user 206 is performing with the connected device 200. For example, the application-agnostic main active network usage category may be an online gaming network usage category even though a VoIP network usage category and a web browsing network usage category are detected as being execute in parallel on the connected device 200.

In an example, the method further comprises determining 130 priorities for the one or more application-agnostic network usage categories within the encrypted data transmission 280 between the connected device 200 and the access point 230. In this way, an appropriate prioritization of the network traffic flows may be set, based preferences of the Internet service provider, and/or preferences of a user 206 of the connected device 200 and/or of the access point 230. For example, a VoIP network usage category may be preferred over an online gaming network usage category.

In an example, the method further comprises collecting 132 network usage analytics based on the one or more application-agnostic network usage categories within the encrypted data transmission 280 between the connected device 200 and the access point 230. The network usage analytics may be used to collect information on actual network usage of the access point 230, but to also then adjust the priorities as explained in the previous paragraph based on the network usage analytics.

In an example, the method further comprises determining 134 a network infrastructure optimization based on the one or more application-agnostic network usage categories within the encrypted data transmission 280 between the connected device 200 and the access point 230. The optimization may refer to an upgrade of communication capabilities of the access point 230, for example.

As used herein, the term "connected device" 200 refers to a physical device with communication capabilities.

As used herein, the term "access point" 230 refers to a physical device providing a local area network 222 for the connected device 200, and an access for the connected device 200 to a wide area network (WAN) 224 such as the Internet.

The encrypted data transmission 280 is transferred over a connection between the connected device 200 and the access point 230. The connection is first established between the connected device 200 and the access point 230. Next, the encrypted data transmission 280 may extend from the connected device 200 via the LAN 222 and WAN 224 to a target website 240 using a Hypertext Transfer Protocol/Hypertext Transfer Protocol Secure (HTTP/HTTPS) connection. The establishment of the HTTP/HTTPS connection may also require a data transmission with a domain name system (DNS) server (not illustrated in FIG. 2A or FIG. 2B).

In an example, a local area network 222 may be implemented by a customer-premises equipment (CPE) acting as the access point 230. The CPE 230 may implement the local area network (LAN) 222 between the connected device 200 and the CPE 230. The LAN 222 may be a wireless network, which enables a wireless connection between the CPE 230 and the connected device 200. The CPE 230 also provides an access to the WAN 224. In the connection, data packets may be transferred from and to the connected device 200. In an example, the CPE 230 is configured to generate a wireless non-cellular internet access network 222. The CPE 230 may be configured to operate at a home or an office of a user 206 of the connected device 200. But the access point 230 may also be configured to operate out of the home or the office of the user 206 as a hotspot serving the connected devices 200 in a public place such as a cafe, city center, shopping mall, airport, an arena, etc.

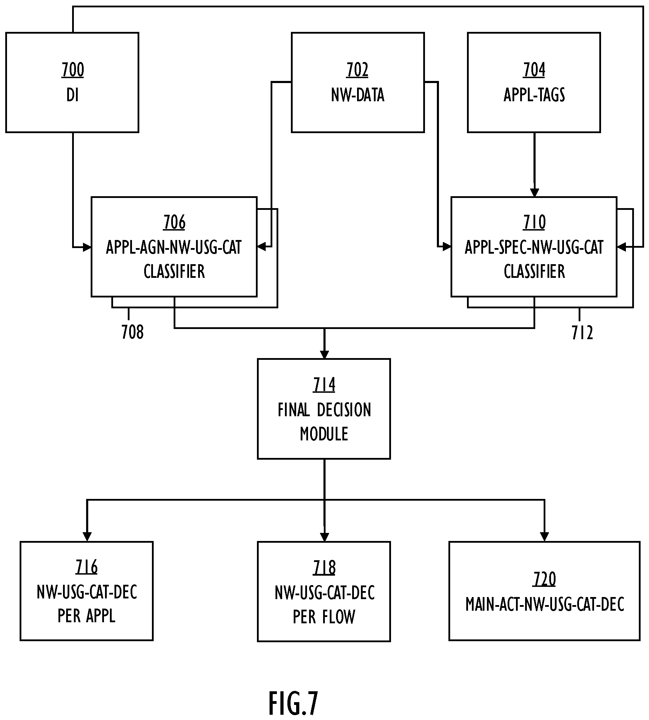

FIG. 7 illustrates further examples of the method. FIG. 1 illustrated examples of the method determining 110 the one or more application-agnostic network usage categories for the one or more network traffic flows based on the network data. This method is presented in FIG. 7 by an application-agnostic network usage category classifier 706, which receives the network data 702 as the input. The examples of FIG. 7 use additional classifiers 708, 710, 712. The network data may contain all encrypted network data from a single connected device 200 over a time window (for example 10 seconds) such as all raw packets or aggregated data per-flow over a time window (for example 1 second). Other inputs may include application tags per-flow, a manufacturer, model and operating system of the connected device 200 as inferred by a device intelligence module 700.

Each application-specific network usage category classifier 710, 712 receives both the network data 702 and application tags 704 as input. Each application-specific network usage category classifier 708, 710 is uniquely implemented per supported application in the system. For example, there is a YouTube^{®} application-specific network usage category classifier 710, which distinguishes between buffered video streaming download, video upload, live video streaming download, live video streaming upload, general browsing, and background activity, resulting in one of these six modes (together with a confidence level). The application-specific network usage category classifier 710 only works on data identified as related to the analyzed application. Each application-specific network usage category classifier 710, 712 contains logic developed using tagged training data of that application. They use all information from all network traffic flows of the application to reach a conclusion on the mode of the application as a whole. The determined mode of the application is then set as the determined application-specific network usage category.

In contrast to the application-specific network usage category classifier 710, 712, the application-agnostic network usage category classifiers 706, 708 only require the network data 702 as input. There may be two the application-agnostic network usage category classifier 706, 708, one classifier 706 for an identification of the network usage category of each individual network traffic flow, and another classifier 708 for an identification of an application-agnostic main active network usage category of the analyzed connected device 200 during the time window. Both of these classifiers 706, 708 may contain logic developed using true-labeled training data from all supported network usage categories.

The application-agnostic network usage category identification classifier 706 analyzes each network traffic flow individually and decides on the usage category for that network traffic flow.

The application-agnostic main active network usage category identification classifier 708 considers the gestalt of the network traffic to and from the analyzed connected device 200. It decides on the primary usage category currently active on the connected device 200 (for example live video streaming or VoIP).

A final decision module 714 receives all outputs from the classifiers 706, 708, 710, 712.The final decision module 714 follows a process where each output from the application-specific network usage classifiers 710, 712 is considered together with the application-agnostic network usage category identification classifier 706 result for each of the network traffic flows associated with the same application. From this vantage point, the final decision module 714 reaches a conclusion 716 on the active network usage category for that application through a Bayesian logic.

Similarly, the final decision module 714 considers the totality of outputs from all application-specific network usage classifiers 710, 712 and application-agnostic main active network usage category identification classifier 708 to reach a conclusion 720 on the main active network usage category for the connected device 200.

The outputs from the final decision module may comprise one or more of an active network usage category of each detected (and supported) application 716, a network usage category of every (individual) network traffic flow 718, and a main active network usage category of the device 720.

All the logic inside the classifiers 706, 708, 710, 712 and the final decision module 714 may be designed to minimize CPU and memory usage due to constraints of running on household routers, while simultaneously minimizing the classification error. They contain a combination of rule-based logic, pre-trained machine learning models, and statistical frameworks.

In general, a machine learning model generates machine learning predictions for consecutive sliding windows over a segment of data. Each machine learning prediction comprises probabilities for predicted network usage category in a single sliding window. The machine learning model may be implemented as a neural network. The neural network is then trained using unsupervised training to learn the network traffic flow relations. During the training phase, supervised training using known inputs and results may also be used to form probability-weighted associations between the inputs and the results (= machine learning predictions). A difference between an actual result and a target result (= ground truth) is defined as an error. Based on the error, the neural network adjusts the probability-weighted associations according to a learning rule. Successive adjustments train the machine learning model to produce accurate machine learning predictions.

An input from the device intelligence module 700 may be used to modulate the likelihood of potential outputs. For example, network traffic flows on a Nintendo^{®} device are more likely to be online gaming network traffic flows, while flows from a smart TV are more likely to be video streaming network traffic flows. The device intelligence module 700 may have already detected one or more applications that are related to the one or more network traffic flows. The information on the identity of the application may be used to narrow down the domain of network usage categories

If the application related to the network traffic flow is YouTube^{®}, then the network usage category is not a cloud gaming network usage category. Specific applications may have unique behaviors in different network usage categories. Consequently, application-specific network usage category classifiers 710, 712 are beneficial.

All classifiers 706, 708, 710, 712 may be built based on true-labeled lab recordings of different network usage categories.

In an example, a basic rule-based logic is sufficient for most application-specific classifiers 710, 712. The classification may be performed by a simple rule-based logic or by machine learning (ML) models that were trained on the true-labeled data. In tests by the applicant, Gradient Boosted Decision Trees were found to be the most successful, given high quality variable construction procedures. Application-agnostic classifiers 706, 708 and some more difficult cases in the application-specific realm 710 are in this category.

Each classifier 707, 708, 710, 712 may produce a confidence level together with the classification result.

For each (supported) application that was identified in the network data of the connected device 200, an application-specific network usage category classifier 710 is activated

The application-specific network usage classifier 710, 712 has a logic in it that may be developed based on true-labeled data of that specific application, and may not be generalizable to other applications. For example, the YouTube^{®} classifier may use information on packet size distribution that is specific to YouTube^{®} to differentiate between on-demand and live video streaming with a 95% accuracy.

The application-agnostic main active network usage category classifier 708 may consider the gestalt of data from the connected device 200 over the specified time window and identify the primary network usage category in the data. All network traffic flows are considered simultaneously such that a main activity that is composed of many small network traffic flows may also be identified.

The application-agnostic network usage category classifier 706 per network traffic flow provides futureproofing against ECH and DoH, enabling the tagging of individual network traffic flows without any metadata. It may use information from the history of the network traffic flow (time series of packets and sizes) to determine the network usage category. Even if we have an application-specific network usage category classifier 710 analyzing unencrypted metadata, the application-agnostic network usage category classifier 706 per network traffic flow may still add information by highlighting the specific network traffic flows that carry the most relevant load for the network usage category.

As explained earlier, the processing includes classifying the network usage category of a group of network traffic flows when all network traffic flows are known to belong to the same application 202.

The processing also includes inferring the network usage category of a network traffic flow using information from network traffic flows that belong to other applications (for example inferring that an online gaming network traffic flow exists, based on having a correlated voice-over-IP network traffic flow in the same time window).

Next, let us study how a cybersecurity operator is capable of monitoring 102 the encrypted data transmission 280.

First, the connection between the connected device 200 and the access point 230 is monitored 102. An application 202 executing in the connected device 200 may seek to establish a connection to a target website 240, for example. As shown in FIG. 2A, the connection between the connected device 200 and the access point 202 is routed through an access of the WAN 224 to the target website 240 to implement the encrypted data transmission 280.

Monitoring 102 the encrypted data transmission 280 between the connected device 200 and the access point 230 may be implemented by monitoring the wireless encrypted data transmission 280 in the local area network 222 implemented by the CPE as the access point 230.

The connected devices 200 (such as user devices or Internet of Things (IoT) devices) use websites for various operations. The user 206 of the (user) connected device 200 may use a browser as the application 202 to browse webpages of a website 240, to view media content provided on the webpages, for example. The (IoT) connected device 200 may upload sensor data gathered by one or more sensors onboard the connected device 200 controlled by the application 202 to the website 240, for example. The connected device 200 may download a software update from the website 240, for example. Numerous other well-known operations related to the websites 240 may also be performed by the connected device 200.

The connected device 200 may be configured to execute a website access application 202, such as web user interface application (a web browser, for example), or a stand-alone application (a mobile app, for example), and as a result, the encrypted data transmission 280 from the connected device 200 to an accessed website 240 via the LAN 222 and the WAN 224 is performed. The website access application may automatically cause the encrypted data transmission 280, or, alternatively, the encrypted data transmission 280 may be generated as a result of an action by the user 206 through user interface controls of the website access application 202.

The connected device 200 may create the connection using a packet protocol from the website access application 202 of the connected device 200 to the target website 240. The target website 240 may host a server application enabling access by the website access application 202. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the encrypted data transmission 280 (using TCP streams or UDP datagrams, for example). In the Internet Protocol suite, the encrypted data transmission 280 is operated in a link layer, an internet layer, and a transport layer, and the requests transmitted in the encrypted data transmission 280 are operated in an application layer.

As used herein, the term "monitoring" 102 refers to user-approved lawful interception or monitoring of the encrypted data transmission 280 with a purpose and goal of increasing cybersecurity related to the connected device 200 and its operating environment. As the signal of the encrypted data transmission 280 is monitored 102, the encrypted data transmission 280 is accessed and collected between the transmitting device and the receiving device. The encrypted data transmission 280 may be monitored even if the digital data transmission units (such as messages) of the encrypted data transmission 280 are addressed to the receiving device (such as the access point 230, or the target website 240). The monitoring 102 may be implemented so that the encrypted data transmission 280 is passively monitored, i.e., the encrypted data transmission 280 is not affected by the monitoring 102. Alternatively, if needed, the monitoring 102 may include a seizing of the encrypted data transmission 280, i.e., the encrypted data transmission 280 is actively influenced so that a connection and/or requests and/or responses are blocked until it may be decided whether a cybersecurity action (such as blocking of the encrypted data transmission 280) is required.

As used herein, the term "encrypted data transmission" 280 refers to the transmission and/or reception of (digital) data between the connected device 200 and the access point 230. The encrypted data transmission 280 is transferred using digital data transmission units over a communication medium such as one or more communication channels between the connected device 200 and another network node such as the access point 230 or the target website 240. Besides over a radio interface in the LAN 222, the data may be conveyed over another transmission medium (implemented by copper wires, or optical fibers, for example) in the LAN 222 and the WAN 224. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable encrypted data transmission 280. The communication protocols may implement a protocol stack with different conceptual protocol layers.

The encrypted data transmission 280 may be monitored 102 by a cybersecurity client 252 operating in the access point 230. The encrypted data transmission 280 may be accessed and collected by the cybersecurity client 252. The cybersecurity client 252 may also access a data structure related to the encrypted data transmission 280 established and maintained at the CPE 230 after a successful handshake sequence between the connected device 200 and the CPE 230. The monitored encrypted data transmission 280 may be analyzed in order to perform an appropriate cybersecurity operation by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the connected device 200 and its communication) to enable the device identification.

The WAN 224 such as the Internet uses the Internet Protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) 202 running in the connected device 200.

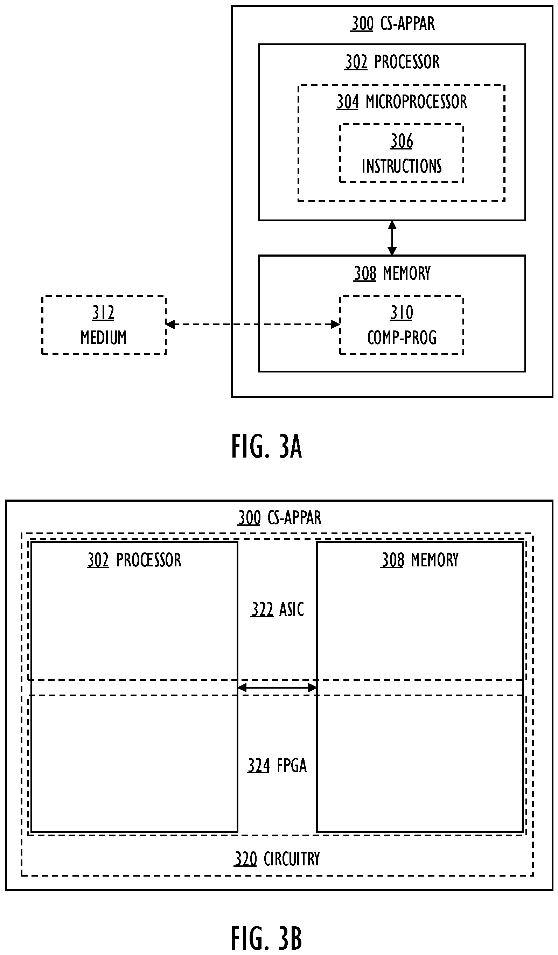

FIG. 3A and FIG. 3B are block diagrams illustrating examples of a cybersecurity apparatus 300. The method described with reference to FIG. 1 may be implemented by the cybersecurity apparatus 300. The apparatus 300 may execute the operations defined in the method. The apparatus 300 may implement an algorithm, which includes the operations of the method, but may optionally include other operations related to the cybersecurity in general. Note that the method described with reference to FIG. 1 may be implemented as a part of the cybersecurity client 252 running in the CPE 230 (or access point) as shown in FIG. 2A and FIG. 2B. As shown in FIG. 2A and FIG. 2B, the cybersecurity apparatus 300 may comprise various distributed actors 252, 254 communicatively coupled 274 with each other.

The cybersecurity apparatus 300 comprises one or more memories 308, and one or more processors 302 coupled to the one or more memories 308 configured to execute the operations described in FIG. 1.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as Go, Java, C, or C++, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 includes, but is not limited to application-specific integrated circuits (ASIC) 322, field-programmable gate arrays (FPGA) 324, application-specific standard products (ASSP), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

The monitoring 102 of the encrypted data transmission 280 is performed in connection with the access point 230, such as by the cybersecurity client 252. The detecting 108 of the one or more network traffic flows and the determining 110 of the one or more network usage categories may be performed by the cybersecurity client 252, and/or by the cybersecurity server 254.

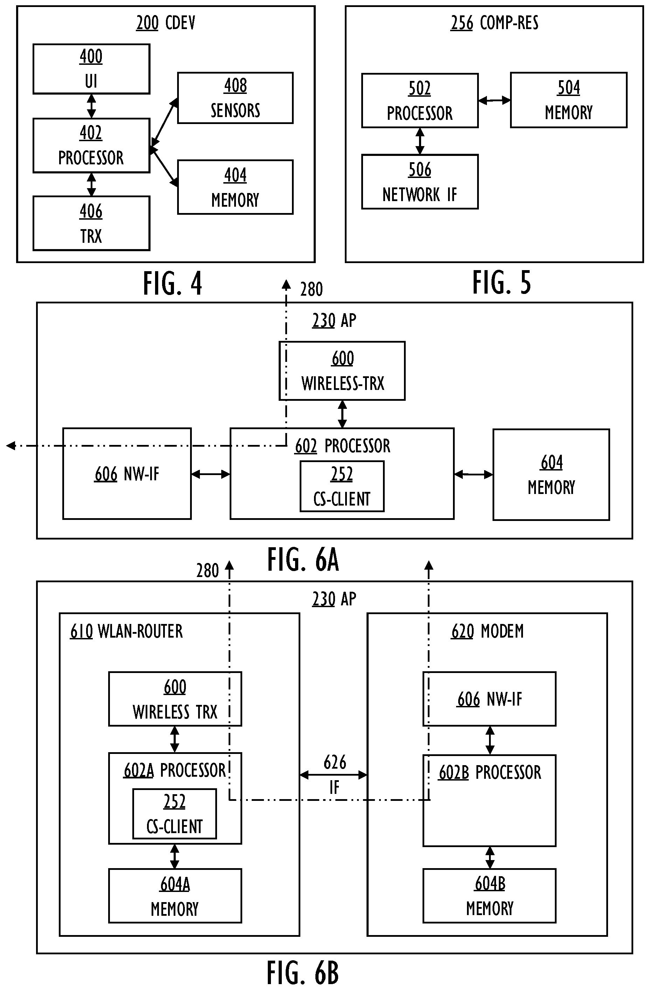

FIG. 4 is a block diagram illustrating an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, a game terminal, another kind of ubiquitous computing device, or some other type of a wired or wireless mobile or stationary communication device operating with or without a subscriber identification module (SIM) or an embedded SIM (eSIM). The connected device 200 may be a personal communication device of the user 206. The connected device 200 may also be an IoT device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

The connected device 200 comprises one or more memories 404, and one or more processors 402 coupled to the one or more memories 404 configured to carry out a functionality of the connected device 200. In addition, the connected device 200 comprises a user interface 400 (such as a touch screen or one or more LEDs), and one or more transceivers 406 (such as a WLAN transceiver, a cellular radio network transceiver, a short-range radio transceiver, and/or a wired transceiver), and also one or more sensors 408.

FIG. 5 is a block diagram illustrating an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 5, the server apparatus 256 comprises one or more memories 504, and one or more processors 502 coupled to the one or more memories 504 configured to carry out the functionality of the cybersecurity server 254. In addition, the server apparatus 256 comprises a network interface (such as an Ethernet network interface card) 506 configured to couple the server apparatus 256 to the Internet 224.

FIG. 6A and FIG. 6B are block diagrams illustrating examples of the CPE 230 as the access point.

The CPE 230 is located at home or office of a user 206 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222 and thus enabling the user 206 of the connected device 200 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi^{®} (or WLAN) or wired signal to implement the LAN 222 to provide access for the connected device 200. Furthermore, the 4G/5G CPE 230 performs the conversion between the 4G/5G cellular radio network signal and the Wi-Fi^{®} or wired signal.

In FIG. 6A, the CPE 230 is an integrated apparatus comprising one or more memories 604, and one or more processors 602 coupled to the one or more memories 604 configured to carry out a part of the method/algorithm in some examples. Additionally, the CPE 230 comprises a wireless radio transceiver 600 configured to create the LAN 222 for enabling access by the connected device 200. The CPE 230 also comprises a network interface 606 to act as a modem configured to connect to the telecommunication circuit of the carrier at the demarcation point, i.e., to the WAN 224. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The CPE 230 may be running the cybersecurity client 252.

In FIG. 6B, the CPE 230 is a two-part apparatus. A WLAN router part 610 comprises the one or more memories 604A, the one or more processors 602A coupled to the one or more memories 604A configured to carry out the method/algorithm, and the wireless transceiver 600 to create the LAN 222 for enabling access by the connected device 200. A modem part 620 comprises the one or more processors 602B coupled to one or more memories 604B configured to carry out modem operations, and the network interface 606 to act as the modem configured to connect to the WAN 224. The WLAN router part 610 may be purchased by the user 206 of the connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 252, another component running on the CPE 230 may be configured to run a part of the algorithm implementing the method in some examples.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources of the processor and memory, whereas the cybersecurity server 254 may operate as a backend with a relatively unlimited resources of the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
monitoring (102) an encrypted data transmission between a connected device and an access point during a time window to obtain network data;
detecting (108) one or more network traffic flows based on the network data; and
determining (110) one or more application-agnostic network usage categories for the one or more network traffic flows based on the network data, wherein one or more unknown applications executing on the connected device cause the encrypted data transmission to be categorized as the one or more application-agnostic network usage categories.

2. The method of claim 1, wherein the network data comprises raw data packets (104) of the encrypted data transmission over the time window, and determining (110) the one or more application-agnostic network usage categories for the one or more network traffic flows based on the network data further comprises:
performing (118) an individual packet analysis of the raw data packets.

3. The method of any preceding claim, wherein the network data comprises aggregated data (106) of the encrypted data transmission per network traffic flow over the time window, and determining (110) the one or more application-agnostic network usage categories for the one or more network traffic flows based on the network data further comprises:
performing (120) a flow analysis of the aggregated data.

4. The method of any preceding claim, wherein each of the one or more application-agnostic network usage categories is defined by one or more of a type of data (112) of the single unknown application transferred via the encrypted data transmission, a nature of a communication (114) of the single unknown application transferred via the encrypted data transmission, a single network usage category for the single unknown application causing the encrypted data transmission, and a set of behaviors (116) of the single unknown application detected in the encrypted data transmission.

5. The method of any preceding claim, wherein the one or more application-agnostic network usage categories comprise one or more of the following: a real time video streaming network usage category, an on-demand video streaming network usage category, a remote desktop network usage category, an online gaming network usage category, a cloud gaming network usage category, a voice over Internet Protocol network usage category, a video conference network usage category, a file download network usage category, a file upload network usage category, and a web browsing network usage category.

6. The method of any preceding claim, further comprising:
determining (122) that two or more network traffic flows having a same application-agnostic network usage category are caused by one unknown application.

7. The method of any preceding claim, further comprising:
determining (124) that two or more network traffic flows having at least two different application-agnostic network usage categories are caused by two or more unknown applications; and
determining (126) that the at least two different application-agnostic network usage categories are inter-related regarding a use case of the connected device.

8. The method of any preceding claim, further comprising:
determining (128) an application-agnostic main active network usage category for the connected device based on the network data.

9. The method of any preceding claim, further comprising:
determining (130) priorities for the one or more application-agnostic network usage categories within the encrypted data transmission between the connected device and the access point.

10. The method of any preceding claim, further comprising:
collecting (132) network usage analytics based on the one or more application-agnostic network usage categories within the encrypted data transmission between the connected device and the access point.

11. The method of any preceding claim, further comprising:
determining (134) a network infrastructure optimization based on the one or more application-agnostic network usage categories within the encrypted data transmission between the connected device and the access point.

12. An apparatus (300) comprising means for carrying out the method of any preceding claim 1-11.

13. A computer program product (310) comprising instructions which, when executed by an apparatus, cause the apparatus to carry out the method of any preceding claim 1-11.

14. A computer-readable medium (312) comprising a computer program (310) with instructions which, when executed by an apparatus, cause the apparatus to carry out the method of any preceding claim 1-11.
